# EUROPÄISCHE PATENTSCHRIFT

(11) **EP 0 902 172 B1**
(45) Veröffentlichungstag und Bekanntmachung des Hinweises auf die Patenterteilung: **19.03.2003**
(21) Anmeldenummer: 98117229.9
(22) Anmeldetag: 11.09.1998
(51) Int. Cl.: F01N 3/20, F02D 41/02

(54) **Verfahren zum Betreiben einer mehrzylindrigen Brennkraftmaschine mit Direkteinspritzung in den Zylinder**
Method for operating a multicylinder internal combustion engine with direct injection into the cylinder
Procédé de fonctionnement d'un moteur à combustion interne multicylindre du type à injection directe dans le cylindre

(30) Priorität: 15.09.1997 DE 19740482
(43) Veröffentlichungstag der Anmeldung: 17.03.1999
(73) Patentinhaber: AUDI AG, 85045 Ingolstadt (DE)
(72) Erfinder: Ottowitz, Alfred, 85084 Reichertshofen (DE); Pfalzgraf, Bernhard, 85051 Ingolstadt (DE)

(56) Entgegenhaltungen:
- DE-A- 4 310 145
- DE-A- 19 510 642

## Beschreibung

Die vorliegende Erfindung betrifft ein Verfahren zum Betreiben einer mehrzylindrigen Brennkraftmaschine mit Direkteinspritzung in den Zylinder.

Bei Brennkraftmaschinen wird angestrebt, durch Nachverbrennung des Kraftstoffs einen Katalysator möglichst schnell auf seine Betriebstemperatur zu bringen, ein thermisches Ausräumen des im Katalysator abgelagerten Schwefels zu ermöglichen sowie das Ansprechverhalten eines eventuell vorgesehenen Abgasturboladers zu verbessern.

Um dieses Ziel zu erreichen, ist es aus dem Stand der Technik bekannt, im Abgastrakt einer Brennkraftmaschine zusätzliche Einspritz- und/oder Zündvorrichtungen für die Nachverbrennung von Kraftstoff anzuordnen. Beispielhaft sei hier die Druckschrift DE 41 39 291 A1 zitiert. Beim Gegenstand dieser Druckschrift wird über eine Leitung im Bereich des Abgaskrümmers eine zusätzliche Menge an Kraftstoff zugeführt, welche im Katalysator beziehungsweise vor dem Abgasturbolader mittels eines Glühstifts fremdgezündet wird. Diese zusätzlichen Vorrichtungen haben jedoch den Nachteil, daß sie den Aufbau der Brennkraftmaschine wesentlich komplizieren und darüber hinaus eine aufwendige Ansteuerung erforderlich machen.

Zudem ist es aus dem Stand der Technik bekannt, eine Sekundärluftpumpe vorzusehen, welche zum Aufheizen des Katalysators auf Betriebstemperatur dient.

Schließlich ist in der Druckschrift DE 195 22 165 C2 und ebenso in der Druckschrift DE 195 10 642 A1 ein Verfahren für die Regelung einer Verbrennungskraftmaschine beschrieben, das bereits ohne separate Einrichtungen zum Zuführen von Sauerstoff oder Luft in den Abgastrakt auskommt. Bei diesem Verfahren wird mittels einer Luftkraftstoffverhältnisregelungseinrichtung das Luftkraftstoffverhältnis in einem Teil der Zylinder auf einen Wert geregelt, der geringer ist als das theoretische Luftkraftstoffverhältnis, und das Luftkraftstoffverhältnis in den übrigen Zylindern auf einen Wert geregelt, der höher ist als das theoretische Luftkraftstoffverhältnis, wodurch Kraftstoff und Luft in das Auspuffgas eingeleitet werden. Damit bei diesem Verfahren die Temperatur der Katalysatoreinrichtung auf einem vorbestimmten Wert gehalten werden kann, muß das Luftkraftstoffverhältnis außerdem in Abhängigkeit von der Katalysatortemperatur geregelt werden.

Vor diesem Hintergrund ist es Aufgabe der vorliegenden Erfindung, ein Verfahren zum Betreiben einer mehrzylindrigen Brennkraftmaschine mit Direkteinspritzung in die Zylinder zu konzipieren, welches die Nachverbrennung des Benzins innerhalb des Abgastraktes ohne zusätzliche Einspritz- und Zündvorrichtungen, ohne Sekundärluftpumpen sowie ohne temperaturabhängige Regeleinrichtungen realisierbar macht.

Gelöst wird diese Aufgabe durch die Merkmale des Patentanspruchs 1, indem zur Nachverbrennung des Benzins innerhalb des Abgastraktes wenigstens ein Zylinder von Zyklus zu Zyklus abwechselnd bei einem Lambdawert größer oder kleiner oder gegebenenfalls gleich 1.0 betrieben wird, und wenigstens ein anderer Zylinder von Zyklus zu Zyklus abwechselnd bei einem Lambdawert kleiner oder größer oder gegebenenfalls gleich 1.0 betrieben wird. Dadurch gelangt in einem Zyklus mittels des wenigstens einen mager betriebenen Zylinders überschüssiger Sauerstoff in das Abgas und mittels des wenigstens einen anderen fett betriebenen Zylinders überschüssiger Kraftstoff in das Abgas oder gelangt abwechselnd dazu in einem anderen Zyklus mittels des wenigsten einen fett betriebenen Zylinders überschüssiger Kraftstoff in das Abgas und mittels des wenigstens einen anderen mager betriebenen Zylinders überschüssiger Sauerstoff in das Abgas oder gelangt gegebenenfalls abwechselnd dazu in einem weiteren Zyklus weder überschüssiger Sauerstoff noch überschüssiger Kraftstoff in das Abgas. Von besonderer Bedeutung ist hierbei, daß von Zyklus zu Zyklus umgeschaltet wird, so daß im Abgastrakt keine ungleiche Temperaturverteilung auftritt, wodurch sich die Lebensdauer der Abgasanlage gegenüber dem Stand der Technik deutlich erhöht und eine temperaturabhängige Regelung der Luftkraftstoffverhältnisse entfallen kann.

Der überschüssige Sauerstoff und der überschüssige Kraftstoff können sich innerhalb des Abgastraktes durchmischen und exotherm miteinander reagieren, so daß es zu einer Nachverbrennung des Benzins kommt. Dabei verlagert sich die Nachverbrennung bis weit in den Abgastrakt hinein, wobei der damit verbundene Temperaturanstieg einen im Abgastrakt angeordneten Katalysator aufheizt. Durch die Aufheizung kann der Katalysator seine Betriebstemperatur schneller erreichen und leichter beibehalten. Bei einer Aufheizung auf entsprechend hohe Temperaturen oberhalb von 650 Grad Celsius kann der Katalysator zudem auch entgiftet werden, indem der darin abgelagerte Schwefel abgebaut wird. Abgesehen von der Aufheizung tritt durch die Nachverbrennung des Benzins innerhalb des Abgastraktes auch ein Druckanstieg vor einem im Abgastrakt angeordneten Abgasturbolader auf. Die Aufheizung sowie der Druckanstieg führen zu einem verbesserten Ansprechverhalten des Abgasturboladers. Auf zusätzliche Vorrichtungen für die Einspritzung und Zündung des Benzins kann dabei verzichtet werden, da das Benzin durch die im Brennraum obligatorisch angeordnete Einspritzdüse direkt in den Brennraum und von dort aus in den Abgastrakt befördert wird. Im Abgastrakt wird das Benzin schließlich durch exotherme Reaktion mit dem überschüssigen Sauerstoff gezündet.

Das erfindungsgemäße Verfahren zum Betreiben einer mehrzylindrigen Brennkraftmaschine ist auch bei kalten Brennkraftmaschinen anwendbar, wobei der wenigstens eine mager betriebene Zylinder jedoch nur eingeschränkt mager betrieben werden kann. Durch die Anwendung dieses Verfahrens bei kalten Brennkraftmaschinen, können die bislang notwendigen Sekundärluftpumpen entfallen.

Bevorzugt werden der wenigstens eine Zylinder und der wenigstens eine andere Zylinder der Brennkraftmaschine zyklusweise im Magerbetrieb bei einem Lambdawert von ca. 1.4 bis 6.0 betrieben, damit ein für die exotherme Reaktion ausreichender Luftüberschuß bereitgestellt wird.

Dagegen werden der wenigstens eine Zylinder und der wenigstens eine andere Zylinder der Brennkraftmaschine zyklusweise im fetten Betrieb bei einem Lambdawert von ca. 0.7 bis 0.9 betrieben, so daß der überschüssige Kraftstoff noch gasförmig im Abgas der Zylinder gelöst ist.

Weist die mehrzylindrige Brennkraftmaschine abgesehen von dem wenigstens einen Zylinder und dem wenigstens einen anderen Zylinder noch wenigstens einen weiteren Zylinder auf, so sollte(n) der/diese Zylinder regulär, das heißt bei einem Lambdawert von ca. 1.0, betrieben werden.

Vorteilhaft werden der wenigstens eine Zylinder, der wenigstens eine andere Zylinder und gegebenenfalls der wenigstens eine weitere Zylinder der Brennkraftmaschine während jedes Zyklus im Mittel bei einem gemeinsamen mittleren Lambdawert von 1.0 betrieben. Denn die Einhaltung eines gemeinsamen mittleren Lambdawertes von 1.0 bewirkt, daß der Katalysator mit sehr hohem Wirkungsgrad arbeitet und daher mit und ohne Nachverbrennung eine optimale Entgiftung des Abgases der Brennkraftmaschine stattfindet.

Besonders vorteilhaft wird der mittlere Lambdawert aller Zylinder der Brennkraftmaschine über einen Kurbelwellenwinkelbereich von mindestens 720 Grad gebildet. Denn auf diese Weise ist die Auswertung der Lambdasignale ausreichend träge, so daß der mittlere Lambdawert aller Zylinder zur Regelung verwendet werden kann.

Zweckmäßig werden der wenigstens eine Zylinder und der wenigstens eine andere Zylinder der mehrzylindrigen Brennkraftmaschine zyklusweise nach einer festgelegten Reihenfolge abwechselnd bei einem Lambdawert größer, kleiner oder gleich 1.0 betrieben. Mit diesem Merkmal wird erreicht, daß sich im Abgastrakt nahezu keine thermischen Spannungen ausbilden und daß das gesamte Abgas noch stärker auf konstanter Temperatur gehalten wird. Dadurch wird eine bessere exotherme Reaktion erreicht, so daß stets eine Nachverbrennung stattfinden kann. Denn nur dann, wenn die Nachverbrennung des Benzins auch tatsächlich stattfindet, ist gewährleistet, daß Temperatur und Druck im Abgastrakt nicht auf unerwünscht tiefe Werte absinken und Verbrennungsrückstände im Abgastrakt keine unerwünscht hohen Werte erreichen. Die Reihenfolge kann hierbei einfach entsprechend der Zündfolge der Zylinder festgelegt werden.

Der wenigstens eine Zylinder und der wenigstens eine andere Zylinder können in jedem Zyklus durch eine Variation von Zündwinkel, Einspritzdauer und Einspritzzeitpunkt aussetzerfrei betrieben werden. Dazu wird beispielsweise in dem Zyklus bei dem der wenigstens eine andere Zylinder mit einem Lambdawert kleiner 1.0 betrieben wird, der Zündwinkel für diesen Zylinder in Richtung "spät" verschoben.

Außerdem können der wenigstens eine Zylinder und der wenigstens eine andere Zylinder in jedem Zyklus durch eine Variation von Zündwinkel, Einspritzdauer und Einspritzzeitpunkt auch bei einem ungefähr gleichen Mitteldruckwert betrieben werden.

Erfolgt die Benzindirekteinspritzung zumindest teilweise bei geöffnetem Auslaßventil der Brennkraftmaschine, so kann hierdurch die thermische Nachreaktion im Abgastrakt noch weiter verbessert werden.

Ist die Benzindirekteinspritzung auf das geöffnete Auslaßventil hin gerichtet, so kann das Benzin fast direkt in den Abgastrakt eingebracht werden.

Und findet die Benzindirekteinspritzung pro Zyklus wenigstens zweimal statt, so kann noch zusätzlicher Kraftstoff, der zur eigentlichen Verbrennung im Brennraum kaum beiträgt, in den Abgastrakt eingebracht werden.

## Patentansprüche

1. Verfahren zum Betreiben einer mehrzylindrigen Brennkraftmaschine mit Benzindirekteinspritzung in die Zylinder, wobei zur Nachverbrennung des Benzins innerhalb des Abgastraktes
von Zyklus zu Zyklus abwechselnd
in einem Zyklus wenigstens ein erster Zylinder bei einem Lambdawert größer 1 und wenigstens ein zweiter Zylinder bei einem Lambdawert kleiner 1 und
in einem anderen Zyklus der wenigstens eine erste Zylinder bei einem Lambdawert kleiner 1 und der wenigstens eine zweite Zylinder bei einem Lambdawert größer 1 und
gegebenenfalls in einem weiteren Zyklus der wenigstens eine erste und der wenigstens eine zweite Zylinder bei einem Lambdawert = 1
betrieben werden.

2. Verfahren nach Anspruch 1, **dadurch gekennzeichnet, daß** der wenigstens eine Zylinder und der wenigstens eine andere Zylinder zyklusweise bei einem Lambdawert von ca. 1.4 bis 6.0 betrieben werden.

3. Verfahren nach einem der Ansprüche 1 oder 2, **dadurch gekennzeichnet, daß** der wenigstens eine Zylinder und der wenigstens eine andere Zylinder zyklusweise bei einem Lambdawert von ca. 0.7 bis 0.9 betrieben werden.

4. Verfahren nach einem der Ansprüche 1 bis 3, **dadurch gekennzeichnet, daß** wenigstens ein weiterer Zylinder zyklusweise bei einem Lambdawert von ca. 1.0 betrieben wird.

5. Verfahren nach einem der Ansprüche 1 bis 4, **dadurch gekennzeichnet, daß** der wenigstens eine Zylinder, der wenigstens eine andere Zylinder und gegebenenfalls der wenigstens eine weitere Zylinder während jedes Zyklus einen gemeinsamen mittleren Lambdawert von ca. 1.0 aufweisen.

6. Verfahren nach einem der Ansprüche 1 bis 5, **dadurch gekennzeichnet, daß** das Mittel der Lambdawerte über einen Kurbelwellenwinkelbereich von mindestens 720 Grad gebildet wird.

7. Verfahren nach einem der Ansprüche 1 bis 6, **dadurch gekennzeichnet, daß** der wenigstens eine Zylinder und der wenigstens eine andere Zylinder zyklusweise nach einer festgelegten Reihenfolge abwechselnd mit einem Lambdawert größer, kleiner oder gleich 1.0 betrieben werden.

8. Verfahren nach Anspruch 7, **dadurch gekennzeichnet, daß** die Reihenfolge entsprechend der Zündfolge festgelegt wird.

9. Verfahren nach einem der Ansprüche 1 bis 8, **dadurch gekennzeichnet, daß** der wenigstens eine Zylinder und der wenigstens eine andere Zylinder in jedem Zyklus durch Variation von Zündwinkel, Einspritzdauer und Einspritzzeitpunkt aussetzerfrei betrieben werden.

10. Verfahren nach einem der Ansprüche 1 bis 9, **dadurch gekennzeichnet, daß** der wenigstens eine Zylinder und der wenigstens eine andere Zylinder in jedem Zyklus durch Variation von Zündwinkel, Einspritzdauer und Einspritzzeitpunkt bei einem ungefähr gleichen Mitteldruckwert betrieben werden.

11. Verfahren nach einem der Ansprüche 1 bis 10, **dadurch gekennzeichnet, daß** die Benzindirekteinspritzung zumindest teilweise bei geöffnetem Auslaßventil der Brennkraftmaschine erfolgt.

12. Verfahren nach Anspruch 11, **dadurch gekennzeichnet, daß** die Benzindirekteinspritzung auf das geöffnete Auslaßventil hin gerichtet ist.

13. Verfahren nach einem der Ansprüche 1 bis 12, **dadurch gekennzeichnet, daß** die Benzindirekteinspritzung pro Zyklus wenigstens zweimal stattfindet.

## Claims

1. Method for operating a multicylinder internal combustion engine with direct injection into the cylinder, in which
alternating from cycle to cycle
in one cycle at least a first cylinder with a lambda value of more than 1 and at least a second cylinder with a lambda vale of less than 1 and
in another cycle at least a first cylinder with a lambda value of less than 1 and at least a second cylinder with a lambda value of more than 1 and
if necessary in a further cycle at least a first and at least a second cylinder with a lambda value = 1
are operated for after-burning the petrol in the exhaust gas section

2. Method according to claim1, **characterised by** the fact that at least one cylinder and a least another cylinder are operated in a cycle with a lambda value of about 1.4 to 6.0.

3. Method according to one of claims 1 or 2, **characterised by** the fact that at least one cylinder and at least another cylinder are operated in a cycle with a lambda value of about 0.7 to 0.9.

4. Method according to one of claims 1 to 3, **characterised by** the fact that at least a further cylinder is operated in a cycle with a lambda value of about 1.0.

5. Method according to one of claims 1 to 4, **characterised by** the fact that at least one cylinder, at least another cylinder and if necessary at least a further cylinder have a joint average lambda value of about 1.0 during each cycle.

6. Method according to one of claims 1 to 5, **characterised by** the fact that the average of the lambda values is formed over a crankshaft angle range of at least 720 degrees.

7. Method according to one of claims 1 to 6, **characterised by** the fact that at least one cylinder and at least another cylinder are operated alternately in a cycle according to an established sequence with a lambda value greater than, smaller than or equal to 1.0.

8. Method according to claim 7, **characterised by** the fact that the sequence is established according to the firing order.

9. Method according to one of claims 1 to 8, **characterised by** the fact that at least one cylinder and at least another cylinder in each cycle are operated free of misfiring by variation of the firing angle, duration of injection and time of injection.

10. Method according to one of claims 1 to 9, **characterised by** the fact that at least one cylinder and at least another cylinder in each cycle are operated by variation of the firing angle, duration of injection and time of injection with an approximately equal average pressure value.

11. Method according to one of claims 1 to 10, **characterised by** the fact that direct injection is at least partly with an open outlet valve of the internal combustion engine.

12. Method according to claim 11, **characterised by** the fact that direct injection is directed towards the open outlet valve.

13. Method according to one of claims 1 to 12, **characterised by** the fact that direct injection takes place at least twice per cycle.

## Revendications

1. Procédé de fonctionnement d'un moteur à combustion interne à plusieurs cylindres avec injection directe d'essence dans les cylindres, dans lequel, pour obtenir une post-combustion de l'essence à l'intérieur du circuit de gaz d'échappement,
d'un cycle à un autre cycle, de façon alternée,
lors d'un premier cycle, au moins un premier cylindre est en fonctionnement avec une valeur lambda supérieure à 1 et au moins un deuxième cylindre avec une valeur lambda inférieure à 1, et
lors d'un autre cycle, le au moins un premier cylindre est mis en fonctionnement avec une valeur lambda inférieure à 1 et le au moins un deuxième cylindre est mis en fonctionnement à une valeur lambda supérieure à 1, et
le cas échéant, lors d'un autre cycle, le au moins un premier et le au moins un deuxième cylindre sont mis en fonctionnement à une valeur lambda = 1.

2. Procédé selon la revendication 1, **caractérisé en ce que** le au moins cylindre et le au moins un autre cylindre fonctionnent, par cycles, à une valeur lambda d'environ 1,4 à 6,0.

3. Procédé selon l'une des revendications 1 ou 2, **caractérisé en ce que** le au moins un cylindre et le au moins un autre cylindre fonctionnent, par cycles, à une valeur lambda d'environ 0,7 à 0,9.

4. Procédé selon l'une des revendications 1 à 3, **caractérisé en ce que** le au moins un autre cylindre fonctionne, par cycles, à une valeur lambda d'environ 1,0.

5. Procédé selon l'une des revendications 1 à 4, **caractérisé en ce que** le au moins un cylindre, le au moins un autre cylindre et, le cas échéant, au moins un cylindre supplémentaire, fonctionnent, pendant chaque cycle, à une valeur lambda moyenne commune d'environ 1,0.

6. Procédé selon l'une des revendications 1 à 5, **caractérisé en ce que** la moyenne des valeurs lambda est formée sur une plage angulaire de vilebrequin d'au moins 720 degrés.

7. Procédé selon l'une des revendications 1 à 6, **caractérisé en ce que** le au moins un cylindre et le au moins un autre cylindre fonctionnent, par cycles, selon un ordre de succession fixé, en alternance, à une valeur lambda supérieure, inférieure ou égale à 1,0.

8. Procédé selon la revendication 7, **caractérisé en ce que** l'ordre de succession est fixé de manière correspondante à l'ordre d'allumage.

9. Procédé selon l'une des revendications 1 à 8, **caractérisé en ce que** le au moins un cylindre et le au moins un autre cylindre, dans chaque cycle, fonctionnent sans raté ou discontinuité, par une variation de l'angle de l'allumage de la durée d'injection et du moment d'injection.

10. Procédé selon l'une des revendications 1 à 9, **caractérisé en ce que** le au moins un cylindre et le au moins un autre cylindre dans chaque cycle fonctionnent par variation de l'angle d'allumage, de la durée d'injection et du moment d'injection, avec une valeur de pression moyenne à peu près identique.

11. Procédé selon l'une des revendications 1 à 10, **caractérisé en ce que** l'injection directe d'essence se fait au moins partiellement alors que la soupape d'échappement du moteur à combustion interne est ouverte.

12. Procédé selon la revendication 11, **caractérisé en ce que** l'injection directe d'essence est orientée sur la soupape d'échappement ouverte.

13. Procédé selon l'une des revendications 1 à 12, **caractérisé en ce que** l'injection directe d'essence se fait, par cycles, au moins à deux reprises.
